# EUROPEAN PATENT SPECIFICATION

(11) **EP 3 406 816 B1**
(45) Date of publication and mention of the grant of the patent: **17.06.2020**
(21) Application number: 18169865.5
(22) Date of filing: 27.04.2018
(51) Int. Cl.: E04D 3/36

(54) **FASTENER AS WELL AS ADJUSTING KEY AND METHOD FOR INSTALLING THE FASTENER**
BEFESTIGUNGSELEMENT SOWIE REGULIERSCHLÜSSEL UND VERFAHREN ZUR INSTALLATION DES BEFESTIGUNGSELEMENTS
FIXATION AINSI QUE RÉGLAGE DE CLÉ ET PROCÉDÉ D'INSTALLATION DE LA FIXATION

(30) Priority: 24.05.2017 FI 20175468; 09.08.2017 FI 20175719
(43) Date of publication of application: 28.11.2018
(73) Proprietor: VILPE Oy, 65610 Mustasaari (FI)
(72) Inventor: SAIKKONEN, Eero, 65370 Vaasa (FI)
(74) Representative: Laine IP Oy

(56) References cited:
- EP-A1- 2 366 843
- CN-Y- 201 432 256
- DE-A1- 3 913 298
- TW-U- M 288 583

## Description

### FIELD OF TECHNOLOGY

The present invention relates to constructional devices. In particular, the present invention relates to a fastener for fastening insulation decking to a receiving structure. More specifically, the present invention relates to a fastener and an adjusting key and a method for installing the fastener.

### PRIOR ART

In building, there is often a need to attach relatively soft insulation decking to relatively hard structures. One example of such a need is the attachment of insulation panels to concrete roof units. Because the insulation decking flexes under loading, such as walking, the fastening cannot be completely rigid, but must flex too. Thus various fasteners have been developed, which permit the compression of flexible decking attached to an inflexible structure. One such fastener is disclosed in publication EP 2366843 B1, in which a sleeve equipped with a flange is based on the insulation decking and in which a screw running through the sleeve is attached to the concrete roof unit. For this purpose, a sufficiently deep hole to permit the adjustment of the height of the screw must be drilled in the roof unit. Between the sleeve and the screw is a nut that can be adjusted relative to the sleeve, by means of which the fastener is clamped to the correct height. In terms of rotational movement, the nut is locked relative to the sleeve by shape-locking, in such a way that the internal passage of the sleeve has the same shape as the hexagonal nut. Thus the nut on the bottom of the sleeve's passage forces the sleeve towards the roof unit by rotating the nut.

Particularly in concrete units there are often joggles due to the manufacturing techniques of concrete units. In addition, insulation decking is often cut to create falls. The varying attachment conditions form a challenge for the fastener, which on the one hand must adhere reliably to the receiving structure, but on the other must permit the insulation decking to compress after fastening. Thus it would be advantageous to create a fastener, which reliably adheres to the receiving structure and which is relatively freely adjustable, or at least is a useful alternative to known fasteners.

### SUMMARY

What is described is a new type of fastener, which comprises a sleeve and a screw, which can be slidingly fitted into the passage of the sleeve, and an adjustment piece, which can be slidingly fitted into the passage of the sleeve in its entirety. The screw comprises a threaded arm extending between its tip and its head. The adjustment piece comprises a centre hole, which can be rotatably attached to the threads of the screw. The adjustment piece also comprises a non-rotationally symmetrical counter-surface for rotating the adjustment piece with a tool and which can be rotatably fitted into the passage of the sleeve.

Also presented is a key for installing such a fastener. The key comprises a socket part that can be fitted adjustably into the passage of the sleeve, and which is arranged to connect to the external counter-surface of the adjustment piece of the fastener. The socket part has a cavity for receiving the screw of the fastener.

On the other hand, a screwdriver is presented for rotating an adjustment piece equipped with a female counter-surface.

Also presented is a method for installing the fastener. In the method, the sleeve is pushed into the insulation decking on top of the receiving structure, the screw is screwed into the receiving structure, and the adjustment piece is rotated relative to the screw to tighten the sleeve in the insulation decking.

Significant advantages are achieved with the aid of the invention. In this described solution, the adjustment piece can move freely relative to the sleeve. Thus the attachment of the screw to the receiving structure is an event separate from the adjustment of the sleeve. Thus the screw can always be attached freely to the receiving structure, such as a concrete slab, which achieves a reliable adhesive strength. More specifically, the screw is rotated to the bottom of a preparatory hole drilled in the receiving structure. The freely rotatable adjustment piece creates a possibility after this to adjust the sleeve to the correct height, without the screw having to have progressed in the preparatory hole. This achieves the reliable adherence of the fastener in the receiving structure and relatively free adjustability.

### BRIEF DESCRIPTION OF THE DRAWINGS

In the following, some embodiments of the invention are described in greater detail with reference to the accompanying drawings, in which:
- FIGURE 1a: shows a cross-section of the fastener according to one embodiment, in the extreme position,
- FIGURE 1b: shows a cross-section of the fastener according to FIGURE 1a, in the adjusted position,
- FIGURE 2a: shows cross-section of the sleeve of the fastener according to FIGURES 1a and 1b,
- FIGURE 2b: shows a side view of the screw of the fastener according to FIGURES 1a and 1b,
- FIGURE 3a: shows a cross-section of the adjustment piece of the fastener according to FIGURES 1a and 1b,
- FIGURE 3b: shows a perspective view of the adjustment piece of the fastener according to FIGURES 1a and 1b,
- FIGURE 4: shows a perspective view of the assembly of the screw according to FIGURE 2b and the adjustment piece according to FIGURES 3a and 3b,
- FIGURE 5: shows a cross-section of the fastener according to FIGURES 1a and 1b, installed in the decking of a concrete roof,
- FIGURE 6a: shows a side view of the screwdriver for installing the fastener according to FIGURES 1a and 1b,
- FIGURE 6b: shows a perspective view of the drill for drilling the preparatory hole,
- FIGURE 6c: shows a perspective view of an adjustment wrench according to one embodiment,
- FIGURE 7a: shows a perspective view of an adjustment wrench according to a second embodiment,
- FIGURE 7b: shows an end view of the adjustment piece according to FIGURE 7a,
- FIGURE 8a: shows a cross-section of a partial assembly of the adjustment piece according to FIGURE 7a and the screw,
- FIGURE 8b: shows a detailed view of part A of FIGURE 8a, and
- FIGURE 9: shows a cross-section of the fastener equipped with the partial assembly according to FIGURES 8a and 8b, installed in the decking of a concrete roof.

### DETAILED DESCRIPTION OF EXEMPLARY EMBODIMENTS

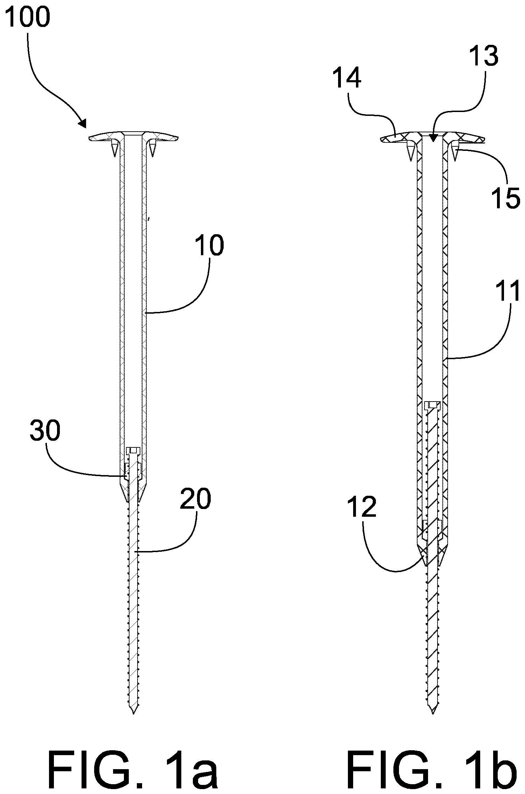

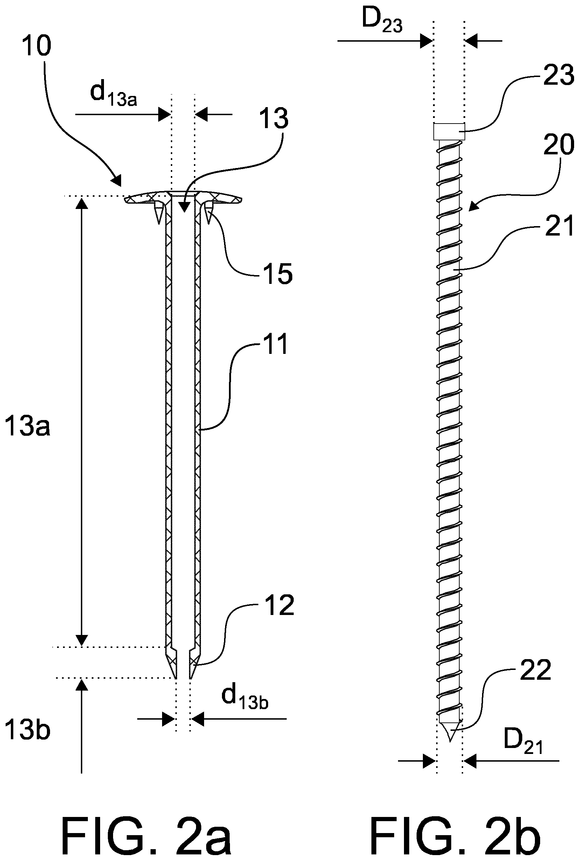

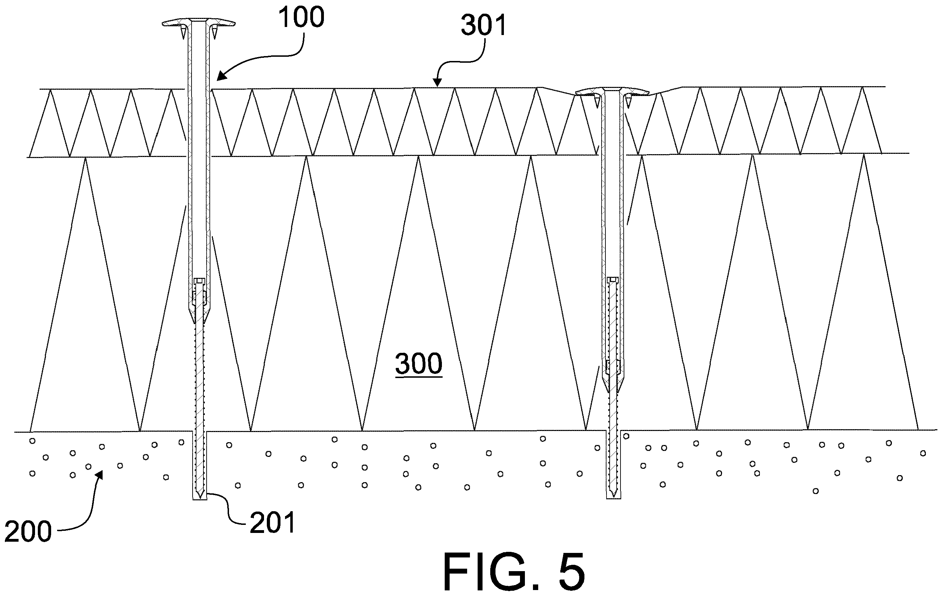

FIGURES 1a, 1b, and 5 show a fastener 100, according to one embodiment, which contains three main components, i.e. a sleeve 10, a screw 20, and an adjustment piece 30. FIGURE 2a shows the sleeve 10 in greater detail. The sleeve 10 can be, for example, injection moulded or 3D printed polymer or some other suitable mouldable material, such as metal or composite. The sleeve 10 comprises an elongated body 11, which extends between the tip 12 and the end flange 14. The tip 12 arranged at the first end of the body 10 has an external diameter that is narrowed relative to the rest of the body 11, to facilitate the installation of the sleeve 10 through the insulation layer. On the other hand, the end flange 14 arranged at the other end of the body 10 has a shape that extends radially, which external diameter, which is greater than the rest of the body 11, prevents the sleeve 10 from penetrating the insulation layer.

A passage 13 runs through the body 11, and has a wide portion 13a and a narrow portion 13b. More specifically, the diameter d₁₃ₐ of the wide portion 13a is greater than the diameter d_{13b} of the narrow portion. The diameters d₁₃ₐ and d_{13b} are, in other words, the internal diameters of the sleeve 10. The wide portion 13a is intended to permit the axial movement of the screw 20 and the adjustment piece 30 in the passage 13, whereas the narrow portion 13b is intended to allow the screw 20 to move, but prevent the adjustment piece 30 from moving, through the tip 12 of the sleeve 10. In this context, the term *axial dimension* refers to the dimension, in which the passage 13 of the sleeve 10 extends, in other words its longitudinal axis. Thus the axial movement of the screw 20 and the adjustment piece 30 takes place in the direction of the longitudinal axis of the body 11 of the sleeve 10. Thus the narrow portion 13b of the passage 13 is in the area of the tip 12 and the wide portion 13a in the area of the rest of the body 11, particularly the area of the end flange 14. The cross-sectional shape of the passage relative to the longitudinal axis is circular, according to the embodiment shown in the FIGURES.

In the end flange 14 is arranged at least one, preferably two or more, particularly preferably 2 - 4, retainer point/retainer points 15. The retainer point 15 is a sharp claw, protruding axially from the end flange 14 towards the tip 12 of the body 10. The retainer point 15 is intended to penetrate the surface of the insulation layer and sink into the insulation layer when the end flange 14 is pressed against the surface of the insulation layer. When the retainer point 15 has submerged in the insulation layer it increased the fastener's tearing resistance from the insulation decking. If there is more than one retainer point, it is preferable to arrange the retainer points evenly on the circumference of the end flange 14. The diameter d₁₃ₐ of the wide portion 13a preferably changes sharply to become the diameter d_{13b} of the narrow portion, in order to create a shoulder in the passage 13, which shoulder acts as a base for the adjustment piece 30. In the examples of FIGURES 1 - 5 the shoulder is bevelled.

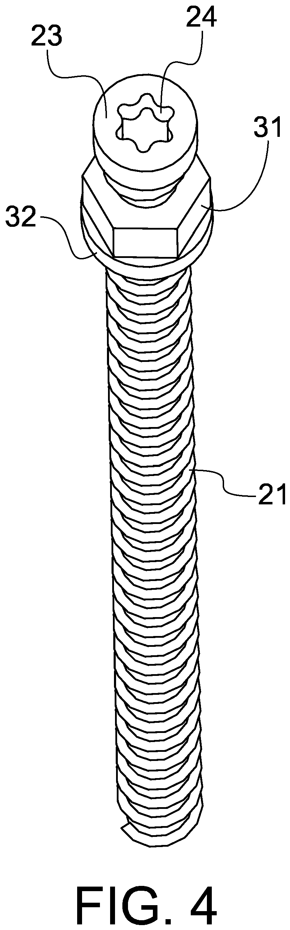

FIGURE 2b shows the screw 20 in detail. As can be seen, the shaft 21 of the screw 20, equipped with external threads, extends between the point 22 and the head 23. The point 22, arranged in the first end of the screw 20, can, according to FIGURE 2b, be sharp and cutting, so that it is suitable for screwing, for example, into a sheet-metal roof. Alternatively, the screw 20 can be a machine screw equipped with a blunt tip. The threaded portion preferably extends over the entire distance of the shaft 21 from head 23 to point 22. The end of the head 23 arranged at the other end of the screw 20 is equipped with a groove 24, which in the example of FIGURE 4 is a Torx groove, connecting to a tool. Of course, other tool grooves too, such as Philips and Allen screws, etc., can also be considered. The head 23 of the screw 20 is exceptionally narrow. The head 23 has a diameter D₂₃, which is preferably as large, or only slightly larger than the diameter D₂₁ of the arm 21. The diameter D₂₁ of the arm is taken from the point of the thread, i.e. it represents the largest diameter of the threaded portion. The screw 20 is dimensioned relative to the sleeve 10 in such a way that the screw 20 can be run through the sleeve 10. In other words, the diameters D₂₁ and D₂₃ of the arm 21 and head 23 of the screw 20 are smaller than the diameter d_{13b}, of the wide portion 13b of the passage 13 of the sleeve, respectively, which permits the axial movement of the screw 20 in the passage 13. On the other hand, the screw 20 and the sleeve 10 are dimensioned in such a way that the screw 20 cannot escape from the point 12 of the sleeve 10. In other words, the diameter D₂₁ of the arm 21 of the screw 20 is dimensioned to be smaller than and the diameter D₂₃ of the head 23 larger than the diameter d_{13b} of the narrow portion 13b of the passage of the sleeve 10.

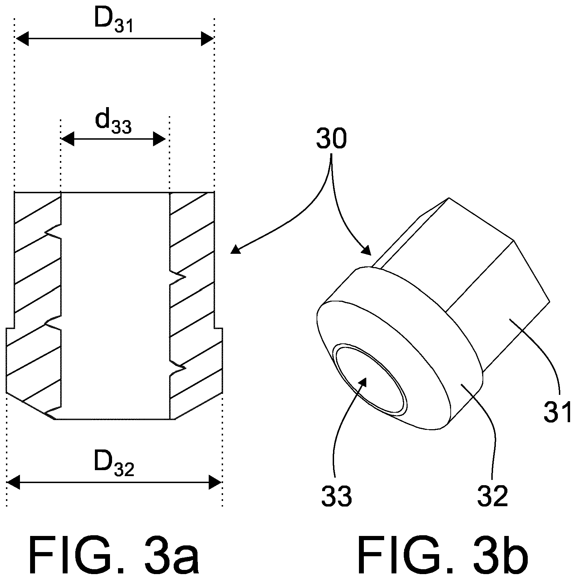

FIGURES 3a and 3b show the adjustment piece 30 in detail. According to the embodiment shown, the adjustment piece 30 is a nut, which has a cylindrical body 32 and a hexagonal head 31. The head 31 forms a counter-surface for connecting to a corresponding counter-surface in the tool. A polygon with an unchanging cross-section could also be used (not shown). According to the example of the FIGURES, the body 32 is rotationally symmetrical, so that it can rotate in the rotationally symmetrical passage 13 around the longitudinal axis of the sleeve 10. In this context, the term *rotation* refers to a rotational movement taking place around an axis, in which rotation is permitted for a distance of more than 360 degrees. The end of the body 32 is bevelled, so that it fits with the bevel between the wide 13a and narrow 13b portions in the passage 13. According to this embodiment, the counter-surface, i.e. head 31 of the adjustment piece 30 is arranged to be male. In other words, the non-rotationally symmetrical connecting interface of the counter-surface 31 is arranged on the periphery of the adjustment piece 30. As stated, the head 31 can be hexagonal, as in the embodiment shown in the FIGURES, or it can have some other suitable shape-locking shape for rotating, such as a square, grooving, or, for example, an oval. A centre hole 33, in which there can be internal threads for connecting to the threads of the screw 20, runs through the adjustment piece 30. Alternatively, or in addition, the material of the adjustment piece 30 can be selected to be such that it connects cuttingly with the threads of the screw 20. Suitable materials are polymers, particularly nylon, and metals.

In the examples of FIGURES 3a and 3b the body 32 is at least as wide as the head 31. In other words, the diameter D₃₂ of the body 32 is larger than the smallest diameter D₃₁ of the head 31, so that the body 32 forms a base for the adjusting key. More specifically, the diameter D₃₂ of the body 32 is preferably as large as the greatest diameter of the head 31, when the diameter is measured from corner to corner of the polygonal head 31. Further, the diameter D₃₂ of the body 32 is preferably larger than the smallest diameter D₃₁, of the head 31, when the diameter is measured from face to face of the polygonal head 31. The dimensioning appears most clearly in FIGURE 4. When the diameter is taken from the corners of the head 31 and is as large as the diameter of the body 32, a flange is obtained to act as a base for the adjusting key, while minimizing the outer dimensions of the adjusting piece 30.

The diameter D₃₂ of the body 32 is dimensioned to be such that it can be slid in the wide portion 13b of the passage 13, i.e. the diameter D₃₂ of the body 32 is smaller than the diameter d_{13b} of the wide portion 13b of the passage 13. In this context, "smaller than" refers to a sliding fit or a looser fit, i.e. diameters D₃₂ and d_{13b} can have the same nominal dimensions, within the tolerances. The same applies to the other movement permitting fits described here. Similarly, the largest diameter of the head 31 is smaller than the diameter d₁₃ₐ of the wide portion 13a of the passage 13. Both outer diameters D₃₁, D₃₂ of the adjusting piece are larger than the diameter d_{13b} of the narrow portion 13b of the passage 13. The centre hole 33 of the adjusting piece 30 is dimensioned to receive the arm 21 of the screw 20, so that the diameter d₃₃ of the centre hole 33 is, within the fits, as large as or smaller than the diameter D₂₁ of the arm of the screw 20, so that the screw 20 can be screwed into the adjusting piece 30. FIGURE 4 shows the partial assembly of the adjusting piece 30 and the screw 20, in which the shaft 21 of the screw 20 runs through the centre hole 33 of the adjusting piece 30. As can be seen, the narrow head 23 of the screw 20 permits the rotation of the adjusting piece 30 by permitting the sleeve key access to the head 31 of the adjusting piece 30 over the head 23 of the screw 20.

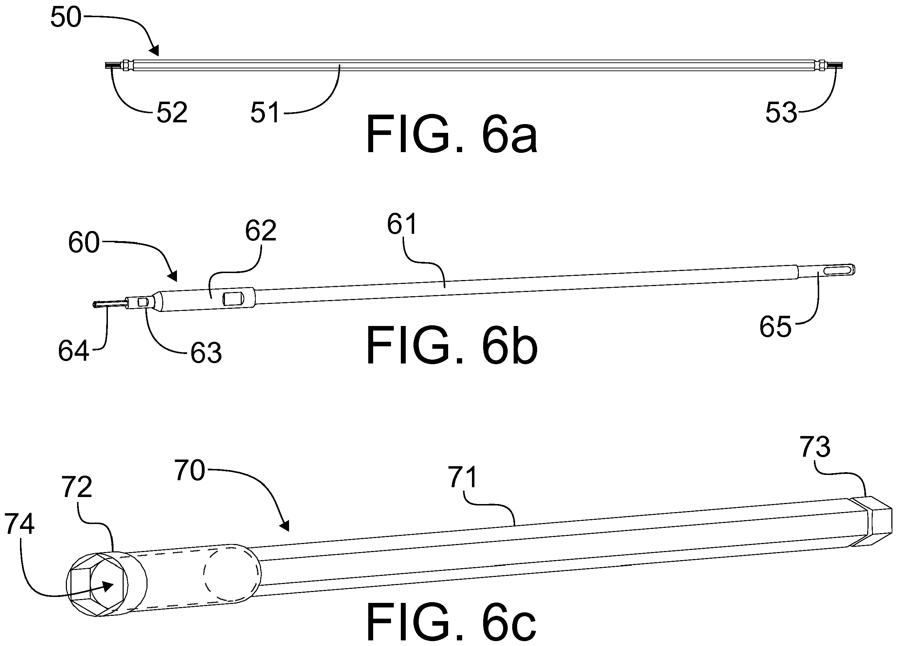

FIGURES 6a - 6c show a tool, by means of which the fastener according to FIGURES 1a - 4 can be installed according to FIGURE 5. FIGURE 6a shows a screwdriver 50 for rotating the screw 20 into the receiving structure 200. The shaft 51 of the screwdriver 50 is elongated and dimensioned to penetrate through even a thick insulation layer 300. For example, the securing of a 600-mm thick insulation layer 300 to a receiving structure 200 requires at least a 600-mm long screwdriver 50 shaft 51. At one end of the shaft 51 is a blade 52, which is arranged to connect to the groove 24 in the head 23 of the screw 20. In the example shown, the blade 52 is a Torx head. At the opposite end of the shaft is a driver 53 for attaching the screwdriver 50 to a handle. The diameter of the blade 52 of the shaft 51 of the screwdriver 50 is selected so that the screwdriver 50 is able to rotate and move in the passage 13 of the sleeve 10. The shaft 51 is preferably non-rotationally symmetrical, for example, hexagonal, star-shaped, or some other male shape, which can connect to a corresponding female non-rotationally symmetrical shape. Thus the screwdriver 50 can on the othe hand be used to screw a screw 20 by connecting with a groove 24 in its head 23 and on the other by connecting to the internal counter-surface of the sleeve-like adjusting piece, which described in greater detail hereinafter.

FIGURE 6b shows a drilling tool 60 for making a preparatory hole 201 in the receiving structure 200. At one end of the shaft 61 of the drilling tool 60 is a drill bit 64 and at the opposite end is a handle 65. The length of the shaft 61 is chosen according to the thickness of the insulation layer 300 to be secured. For example, securing a 600-mm thick insulation layer 300 to a receiving structure 200 requires a shaft 61 with a length of at least 600 mm in the drilling tool 60. The drill bit 64 is preferably relatively short, for example, less than 30 mm, particularly 28 mm, so that the drilling of the preparatory hole 201 will not crack the receiving structure 200. This is particularly advantageous is the insulation layer 300 is secured to the concrete deck of a roof structure. The drill bit 64 can be quite thin, for example, 5 mm. The drill bit 64 is attached to the shaft 61 by means of a body 62. The body 61 is thicker than the thin drill bit 64, for example, 14 mm. The end 63 fo the body 62 can be narrowed, so that a small shoulder is formed around the drill bit 64. In other words, the dimensions of the example drilling tool 60 are 5/14-600 mm. The shoulder is intended to provide a base in the receiving structure 200 for the drill bit 64 in order to limit the depth of the preparatory hole 201 to the length of the drill bit 64. The end 63 can also act as a chuck in an embodiment in which the detachable drill bit 64 can be changed. Alternatively, the body 62 can act as a chuck in an embodiment in which the drill bit 64 can be changed with the end 63 acting as a detachable adapter.

FIGURE 6c shows the adjusting key 70 for rotating the adjusting piece 30 in the threads of the screw 20, by means of which the fastener 100 is adjusted to the correct length. At the first end of the shaft 71 of the adjusting key 70 is a sleeve key 72 - i.e. a sleeve, which should not, however, be confused with the sleeve 10 of the fastener 100 - and at the other opposite end is a handle 73. The sleeve key 72 is arranged to connect with the head 31 of the adjusting piece 30, when the adjusting piece 30 is installed in the passage 13 of the sleeve 10 and also around the screw 20. Thus the internal shape of the sleeve key 72 corresponds to the external shape of the head 31 of the adjusting piece 30. On the other hand, the sleeve key 72 must have a quite thin wall, in order to fit into the narrow free space between the head 31 of the adjusting piece 30 and the body 11 of the sleeve 11. Thus the external diameter of the sleeve key 72 is smaller than the diameter d₁₃ₐ of the wide portion 13a of the passage 13 of the sleeve 10. The sleeve key 72 must also be able to pass the head 23 of the screw 20. Thus the sleeve key 72 is equipped with a cavity 74, which can receive the screw 20, when the sleeve key 72 tightens the adjusting piece 30 against the sleeve 10. The cavity 74 extends in the direction of the shaft 71. If a short sleeve key 72 is used, the shaft 71 can be hollow for the same reason.

The operation of the fastener 100 is simple. In the following, the operation of the fastener 100 described above is described in the installation of a 600-mm thick insulation decking 300 in a receiving structure 200, which is a thin concrete roof unit. For the installation, a fastener 100 suitable for 600-mm insulation decking is then chosen, which can be of different sizes at regular intervals of, for example 50 mm. The fasteners are installed quite close to the edge area of the insulation decking 300, even as little as only 20 mm from the edge. In the case of the example, the length of the sleeve 10 is less than 600 mm to permit a flexing tolerance. The length of the sleeve 10 is preferably at least 20-mm shorter than the thickness of the insulation decking 300, in order to create a sufficient flexing tolerance. The length of the sleeve 10 is then 20 mm or more smaller than the thickness of the insulation decking 300.

First, the insulation decking 300 is placed on top of the receiving structure 200 and a preparatory hole 201 is made in the receiving structure 200 using a drilling tool 60. The preparatory hole can be, for example, 5-mm wide and 28-mm long. The drilling tool 60 is selected according to the thickness of the insulation decking 300, so that, for example, to install 600-mm thick insulation decking 300 a drilling tool 60 at least 600-mm long is selected. When drilling, the drill bit 64 penetrates the outer surface 301 of the insulation decking and the insulation decking and forms a preparatory hole 201 in the concrete, the length of which is limited by the shoulder at the end of the drill bit 64, formed by the end 63 of the body 62. Once the preparatory hole 201 has been made, the fastener 100 is set in the insulation decking 300 by pushing it into the preparatory hole. The fastener 100 can then be partly assembled, in that all three components are in place. Alternatively, only the sleeve 10 can be installed at this stage.

When the sleeve 10 has been pushed in, the screw 20 is rotated in the preparatory hole 201 using the screwdriver 50, which can be driven, for example, by an electric drill or a battery or manual screwdriver (not shown). Because the preparatory hole 201 has been drilled to a fixed size, the fitter will feel through the handle when the screw 20 is at the bottom of the preparatory hole. Thus the screw 20 will be sufficiently deeply in the receiving structure to achieve a proper attachment. When securing the insulation decking 300 described above to concrete, the screw 20 can be, for example, a 6.2 x 105-mm concrete screw with a T-25 cross-head. At this stage, the adjusting piece 30 can be installed around the screw 20, or it can - if the head 23 of the screw 20 is at most as wide as the shaft 21 of the screw 20 - be installed afterwards. In the described example, the diameter D₂₃ of the head 23 of the screw 20 is less than 8 mm, so that an 8-mm adjusting piece 30 can be rotated in place. If the adjusting piece 30 is installed in place around the screw 20 (FIGURE 4), the adjusting piece 30 rotates along with the screw 20 in the passage 13. It is then preferable that the adjusting piece 30 is installed as closely as possible to the head 23 of the screw 20.

When the screw 20 is secure in the preparatory hole 201, a check is made to ensure that the fastener 100 is at the bottom, i.e. whether the end flange 14 of the sleeve 10 is secure in the outer surface 301 of the insulation decking 300. If it is not (FIGURE 1a, left-hand fastener of FIGURE 5), the fastener 100 must be adjusted, in order to close the gap between the end flange 14 and the outer surface 301 of the insulation decking 300. If the adjusting piece 30 is not already in place and the centre hole 33 of the adjusting piece 30 is, within the tolerances, at most as great as the head 23 of the screw 20, the adjusting piece 30 is installed in place in the thread of the screw 20. The adjusting piece 30 is begun to be rotated relative to the screw 20 with the adjusting key 70. The adjusting key 70 can be rotated by a driver connected to the handle 73, mechanically or manually. The sleeve key 72 of the adjusting key 70 must therefore connect to the head 31 of the adjusting piece 30 and accept the head 23 of the screw 20 in its cavity 74. When the adjusting key 70 is rotated around its longitudinal axis, the adjusting piece 30 rotates in the thread of the screw 20 around the longitudinal axis of the sleeve 10 and along this towards the tip 12 of the sleeve 10. The screw 20 remains in place, because the friction between the screw 20 and the receiving structure 200, such as concrete or steel, exceeds the friction between the screw 20 and the adjusting piece 30.

When the adjusting piece 30 is rotated, its body 32 may strike the shoulder between the wide portion 13a and narrow portion 13b of the passage 13, but the friction between the adjusting piece 30 and the body 11 of the sleeve 10 does not exceed the friction between the long body 11 of the sleeve 10 and the insulation decking 300, so that the adjusting piece 30 does not rotate the sleeve 10 along with the adjusting piece 10. The adjusting piece 30 is rotated relative to the screw 20, until the adjusting piece 30 has pushed the point 12 of the sleeve 10 forward and the sleeve 10 has moved axially towards the receiving structure 200 long enough for the end flange 14 of the sleeve 10 to touch the outer surface 301 of the insulation decking 300. The actual sleeve 10 is not intended to rotate around its longitudinal axis. The fitter can detect that the sleeve 10 is at the bottom, when the retainer claws 15 have sunk into the outer surface 301 of the insulation decking 300 and are no longer visible. The insulation decking 300 can remain slightly depressed at the securing point (right-hand fastener of FIGURE 5). The retainer claws 15 then form a secure grip on the insulation decking 300. This arrangement reduces the risk that the edge of the insulation decking 300 might tear at the fastener. It is preferable to equip the sleeve 10 with retainer points 15, which can increase its tensile strength by as much as about 30 % compared to a sleeve in which there are no retainer points.

If the screw equipped with a drill bit is attached, for example, to a sheet-metal roof, it is not essential to drill a preparatory hole, instead the screw can be rotated directly into place in the receiving structure. Depending on the material of the insulation decking, it is then either necessary or optional to make a preparatory hole in the insulation decking before installation of the fastener.

Once the fastener 100 is installed, the insulation decking 300 is secure in the receiving structure 200. A sliding fit between the screw 20 and the sleeve 10 permits axial movement by the sleeve 10 towards the receiving structure 200, so that the insulation decking 300 can compress, for example, in a situation in which someone walks on top of the insulation decking 300.

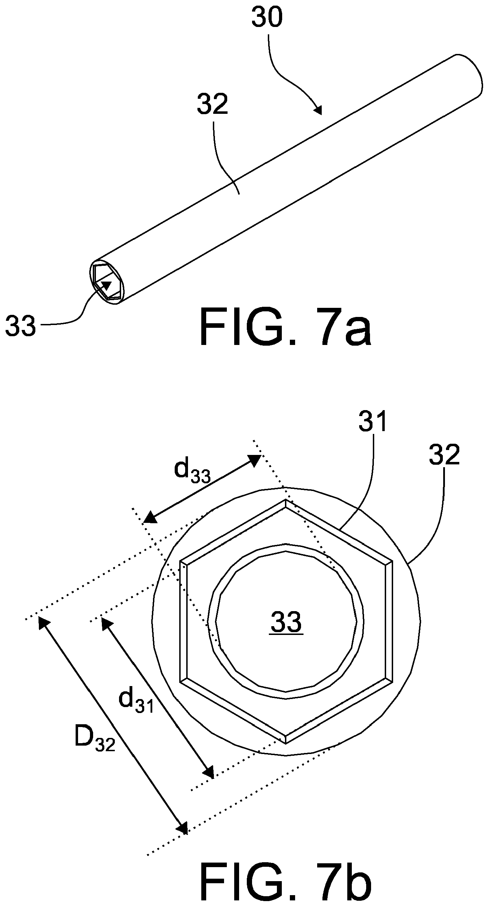

FIGURES 7a and 7b show an alternative to the embodiment shown in FIGURES 1 - 5 for achieving the same effect. Unlike in the embodiment shown in FIGURES 1 - 5, in the alternative embodiment shown in FIGURES 7a and 7b, the counter-surface 31 of the adjusting piece 30 is arranged to be female, i.e. a non-rotationally symmetrical connection interface is arranged in the surface defining the centre hole 33 of the adjusting piece 30. In this context, the term centre hole refers to the internal cavity of the adjusting piece 30. In other words, the adjusting piece 30 is hollow. The cross-sectional form of the counter-surface 31 can be, for example, the hexagonal ring shown in the FIGURES, to which a screwdriver 50 according to FIGURE 6a can be connected, more specifically its shaft 51 of the same shape. In other words, the adjusting piece 30 can be a long Allen nut and the screwdriver 50 can comprise an Allen-key shaft.

The adjusting piece 30 has an elongated body 32, the outer surface of which is rotationally symmetrical, due to which the adjusting piece 30 can rotate in the passage 13 of the sleeve 10. The external diameter D₃₂ of the body 32 of the adjusting piece 30 is dimensioned to have a loose or sliding fit to the internal diameter d₁₃ₐ of the passage 13 of the sleeve 10. Thus the external shape of the body 32 of the adjusting piece 30 can remained unchanged over the entire length of the adjusting piece. The body 32 of the adjusting piece encloses two portions. The first portion 32a of the body 32 is intended to receive the threaded portion 21 of the screw 20. Thus the first portion 32a of the body 32 can be smooth, so that it connects with the threads of the screw 20, particularly cutting threads, or it can be equipped with internal threads to be able to connect with the threads of the screw 20. Thus the internal diameter d₃₃ of the first portion 32a (FIGURE 7b) is dimensioned to correspond to the external diameter D₂₁ of the threaded portion 21 of the screw 20 (FIGURE 2b). The second portion 32b of the body 32 is intended to receive the head 23 of the screw 20 and the threaded portion 21 relatively freely, i.e. with a loose fit. The internal diameter d₃₁ (i.e. the smallest internal diameter of the portion comprising the counter-surface) of the second potion 32b of the body 32 is dimension to have a loose or sliding fit with the external diameter D₂₃ of the head 23 of the screw 20. The second portion 32b of the body 32 is shaped to be non-rotationally symmetrical, i.e. it comprises a female head 31. Thus, the internal diameter d₃₃ of the first portion 32a being smaller than the internal diameter d₃₁ of the second portion 32b, the internal cavity of the body 32 forms, i.e. the centre hole 33 comprises a bottom shoulder for receiving the head 23 of the screw 20. The bottom shoulder facilitates the formation of the partial assembly 20, 30 by limiting the movement of the screw 20 in the length of the adjusting piece 30. On the other hand, the shorter the first portion 32a is, the less friction prevails between the screw 20 and the adjusting piece 30, so that the adjustment of the sleeve 10 requires less force. It would be also possible to implement the adjusting piece without the bottom shoulder described above, when the internal cavity of the body would be of even thickness, i.e. an unaltered through-hole. A screw without a head would then have to be used.

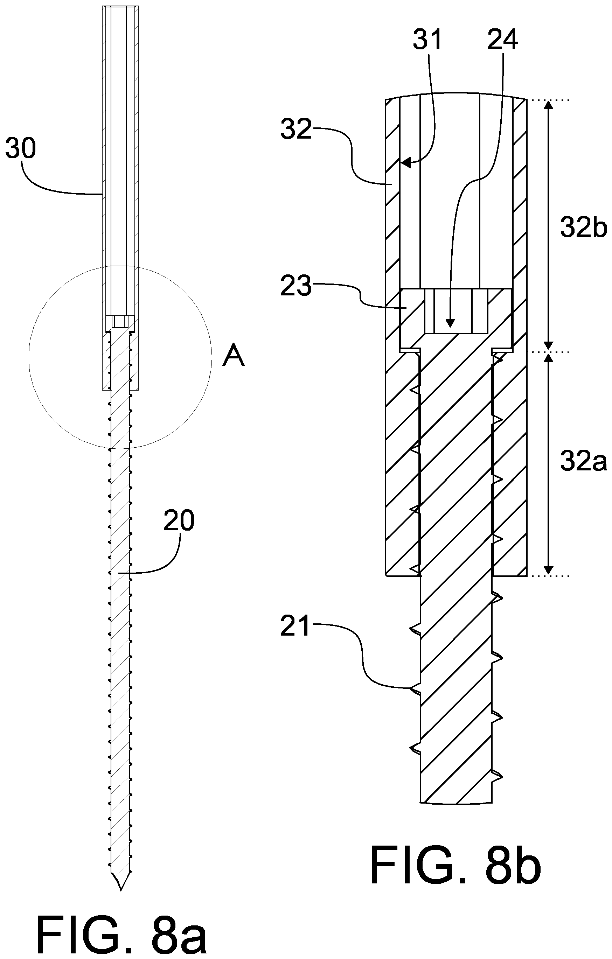

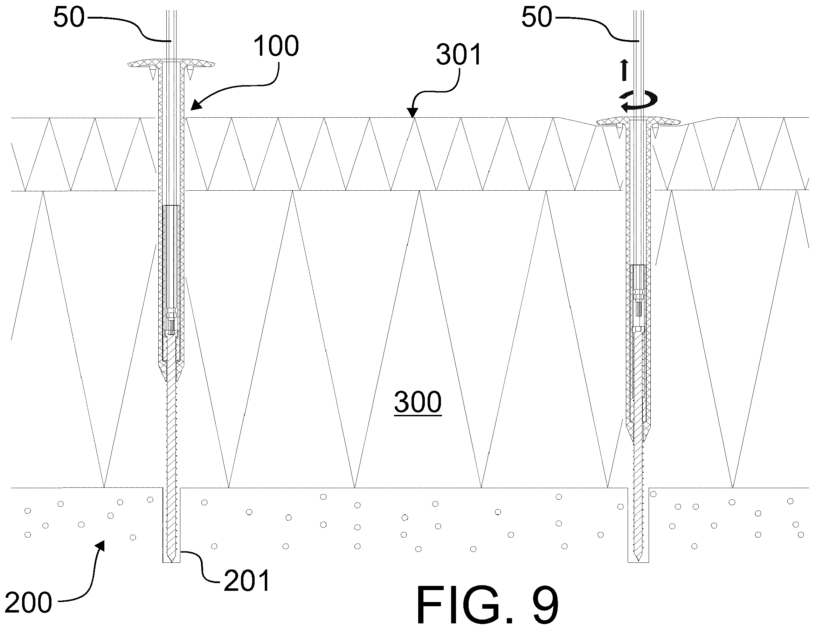

The operation of the adjusting piece 30 according to the embodiment in FIGURES 7a and 7b differs from that shown in FIGURES 1 - 5 in how the fastener 100 is adjusted to the correct height with the aid of the adjusting piece 30. The initial stage of the installation, i.e. the drilling of the preparatory hole 201 and the installation of the sleeve 10, is implemented as above. Once the sleeve 10 is in place, the partial assembly (FIGURE 8) formed by the screw 20 and the adjusting piece 30 is lowered into the sleeve 10 (FIGURE 9). It is then preferable that the screw 20 is at the bottom of the adjusting piece 30, according to FIGURE 8a. Once the partial assembly 20, 30 is in place, the screwdriver 50 is lowered into the sleeve 10 so that the blade 52 connects with the groove 24 in the head 23 of the screw 20. Due to the mutual shaping and dimensioning of the screwdriver 50 and the body 32 of the adjusting piece 30, the screwdriver's 50 non-rotationally symmetrical, such as, for example, hexagonal or octagonal shaft 51 is able to move through the correspondingly non-rotationally symmetrical female counter-surface 31. By rotating the screwdriver 50, for example, with an electric drill, the screw 20 screws to the bottom of the preparatory hole 201. The preparatory hole 201 can be, for example, about 30-mm deep, to ensure a sufficient grip. When the screw 20 has been tightened in place, a check is made to ensure that the sleeve 10 is at the correct height, by ensuring that the flange 14 of the sleeve 10 rests against the outer surface 301 of the insulation decking 300. If it does, i.e. there is no gap between the flange 14 and the outer surface 301, the installation is finished.

If there is a gap between the flange 14 and the outer surface 301, the sleeve 10 must be adjusted to the correct height to close the gap. To adjust the height of the sleeve 10, the screwdriver's 50 blade 52 is detached from the groove 24 in the head 23 of the screw 20 by pulling it in the direction of the shaft 51 outwards in the sleeve 10 (see the arrow upwards in FIGURE 9), when the rotational movement of the screwdriver 50 is no longer transmitted to the screw 20. Now the screwdriver's 50 non-rotationally symmetrical shaft 51 is, however, still shape-locked to the female counter-surface 31 of the adjusting piece 30. By rotating the screwdriver 50 (see the rotation arrow in FIGURE 9) the rotational movement is transmitted through the counter-surface 31 to the adjusting piece 30, which is attached in the threaded portion 21 of the screw 20 in the first portion 32a of the body 32. Because the screw 20 is secured to the receiving structure 200, the adjusting piece 30 begins as it rotates to move along the thread of the screw 20 towards the receiving structure 200. The downwardly moving adjusting piece 30 then also pushes the sleeve 10 is front of it towards the receiving structure 200. The screwdriver's 50 rotational movement is stopped once the sleeve 10 has progressed far enough for the flange 14 of the sleeve 10 to bottom on the outer surface 301 of the insulation 300. After this, the screwdriver 50 can be pulled out of the sleeve 10, when the installation is finished.

As can be seen, the particular advantage of the embodiment according to FIGURES 7 - 9 is that, in installation, instead of a separate screwdriver 50 and adjusting key 60, only one tool is needed to install the screw 20 and adjust the height of the sleeve 10.

It should also be noted, that each of the embodiments described above can also be combined to form an installation kit, which comprises a fastener 100, preferably a group of fasteners, and a screwdriver 50 and/or adjusting key 70. Depending on whether an adjusting piece 30 equipped with a male (FIGURES 1 - 5) or female (FIGURES 7 - 9) counter-surface 31 is used, the installation kit can include, or not include an adjusting key 70, respectively.

**LIST OF REFERENCE NUMBERS**

| **No.** | **Part** | **No.** | **Part** |
|---|---|---|---|
| 10 | sleeve | 61 | shaft |
| 11 | body | 62 | body |
| 12 | tip | 63 | end |
| 13 | passage | 64 | drill bit |
| 13a | wide portion | 65 | handle |
| 13b | narrow portion | 70 | adjusting key |
| 14 | end flange | 71 | shaft |
| 15 | retainer claw | 72 | sleeve key |
| 20 | screw | 73 | handle |
| 21 | shaft | 74 | cavity |
| 22 | point | 100 | fastener |
| 23 | head | 200 | receiving structure |
| 24 | groove | 201 | hole |
| 30 | adjusting piece | 300 | insulation |
| 31 | counter -surface | 301 | surface |
| 32 | body | d₁₃ₐ | internal diameter of wide portion of sleeve passage |
| 33 | centre hole | d_{13b} | internal diameter of narrow portion of sleeve passage |
| 50 | screwdriver | D₂₁ | external diameter of screw shaft |
| 51 | shaft | D₂₃ | external diameter of screw head |
| 52 | blade | D₃₁ | external diameter of adjusting-piece head |
| 53 | handle | D₃₂ | external diameter of adjusting-piece body |
| 60 | drilling tool | d₃₃ | Internal diameter of adjusting-piece centre hole |

LIST OF PUBLICATIONS

## Claims

1. A fastener (100) which comprises:
- a sleeve (10), which comprises a body (11) equipped with a passage (13),
- a screw (20), which:
∘ comprises a point (22) and a head (23),
∘ comprises a shaft (21), extending between the point (22) and the head (23), equipped with a thread, and which screw (20)
∘ is configured to be slidingly fitted to the passage (13) of the sleeve (10), and
- an adjusting piece (30), which:
∘ comprises a centre hole (33), which is configured to be rotatably attached to the thread of the screw (20),
∘ comprises a rotationally non-symmetrical counter-surface (31) for rotating the adjusting piece (30) with a tool (50, 70), and which adjusting piece (30)
∘ is configured to be slidingly fitted in its entirety to the passage (13) of the sleeve (10),
**characterized in that** the adjusting piece (30) is configured to be rotatably fitted to the passage (13) of the sleeve (10).

2. The fastener (100) according to claim 1, wherein:
- the body (11) of the sleeve (10) has a longitudinal axis,
- the passage (13) extends in the direction of the longitudinal axis of the body (11), and wherein
- the adjusting piece (30) is, when installed in the passage (13), configured to be rotated around the said longitudinal axis and to be slid in the direction of the longitudinal axis.

3. The fastener (100) according to claim 1 or 2, wherein the fitting between the adjusting piece (30) and the passage (13) permits a rotational movement between the adjusting nut (30) and the passage (13).

4. The fastener (100) according to any of the above claims, wherein the passage (13) comprises:
- a wide portion (13a), which has a diameter (d₁₃ₐ), and
- a narrow portion (13b), which has a diameter (d_{13b}), which is smaller than the diameter (d₁₃ₐ) of the wide portion (13a).

5. The fastener (100) according to any one of the preceding claims, wherein:
- the body (11) of the sleeve (10) extends between the point (12) and the end flange (14) and wherein
- the narrow portion (13b) of the passage (13) is in the area of the tip (12) and the wide portion (13a) is in the area of the end flange (14).

6. The fastener (100) according to claim 5, wherein the end flange (14) comprises at least one retainer claw (15), particularly from two to four retainer claws (15), which extends/extend from the end flange (14) in the direction of the body (11).

7. The fastener (100) according to any one of the preceding claims, wherein the centre hole (33) of the adjusting piece (30) comprises an internal thread or formable surface, which can be fitted to the external thread of the screw (20) to create a threaded joint.

8. The fastener (100) according to any one of the preceding claims, wherein:
- the adjusting piece (30) comprises a rotationally symmetrical body (32), from which a rotationally non-symmetrical head (31) protrudes and wherein
- the passage (13) has a longitudinal axis and a circular cross-sectional shape in respect to the longitudinal axis to permit the rotational movement of the adjustment piece (30).

9. The fastener (100) according to any one of the preceding claims, wherein the largest diameter (D₃₂) of the body (32) of the adjusting piece (30) is greater than the smallest (D₃₁) diameter of the head (31) of the adjusting piece (30).

10. The fastener (100) according to any one of the preceding claims, wherein the diameter (D₂₃) of the head (23) of the screw (20) is a large as or smaller than the diameter (D₃₁) of the head (31) of the adjusting piece (30).

11. The fastener (100) according to any one of the preceding claims, wherein the outer diameter (D₃₂, D₃₁) of the adjusting piece (30) is smaller than the internal diameter (d₁₃ₐ, d_{13b}) of the passage (13), so that when the adjusting piece (30) is installed in the passage (13), free space remains between the adjusting piece (30) and the body (11) of the sleeve (10) for receiving the adjusting key (70) connecting to the head (31) of the adjusting piece (30).

12. The fastener (100) according to any one of the preceding claims 4 to 11, wherein:
- the diameter (D₃₂) of the body (32) of the adjusting piece (30) is larger than the diameter (d_{13b}) of the narrow portion (13b) of the passage (13) in order to limit the axial movement of the adjusting piece (30) to the bottom of the passage (13) and wherein
- the largest diameter (D₃₁) of the head (31) of the adjusting piece (30) is smaller than the diameter (d₁₃ₐ) of the wide portion (13a) of the passage (13) in order to form a free space remaining between the adjusting piece (30) and the body (11) of the sleeve (10) and to receive the adjusting key (70) connecting to the head (31) of the adjusting piece (30).

13. The fastener (100) according to any one of the preceding claims 1 to 7, wherein the hollow body (32) of the adjusting piece (30) encloses:
- a first portion (32a), which is arranged to receive the threaded portion (21) of the screw (20), and
- a second portion (32b), which comprises an internal counter-surface (31), which has a rotationally non-symmetrical cross-sectional shape.

14. The fastener (100) according to claim 13, wherein the internal counter-surface (31) is shaped to form a female connecting interface for connecting to a male counter-surface (51).

15. The fastener (100) according to claim 13 or 14, wherein:
- first portion (32a) of the body (32) of the adjusting piece (30) has an internal diameter (d₃₃),
- second portion (32b) of the body (32) of the adjusting piece (30) has an internal diameter (d₃₁), which is larger than the internal diameter (d₃₃) of the first portion (32a) in order to form a bottom shoulder for the head (23) of the screw (20).

16. A method for installing a fastener (100) according to any one of the preceding claims 1 - 15, which method is **characterized in**:
(a2) pressing the sleeve (10) into the insulation decking (300) on top of the receiving structure (200),
(b) screwing the screw (20) into the receiving structure (200),
(c) rotating the adjusting piece (30) in respect to the screw (20) for tightening the sleeve (10) to the insulation decking (300).

17. The method according to claim 16, wherein:
(a1) before step (a2), drilling a preparatory hole (201) in the receiving structure (200) and the insulation decking (300) on top of it, whereby
in stage (b) the screw (20) is screwed into the preparatory hole (201).

## Patentansprüche

1. Befestigungselement (100), das Folgendes umfasst:
- eine Muffe (10), die einen mit einem Durchgang (13) versehenen Körper (11) umfasst,
- eine Schraube (20), die:
∘ eine Spitze (22) und einen Kopf (23) umfasst,
∘ einen Schaft (21) umfasst, der sich zwischen der Spitze (22) und dem Kopf (23) erstreckt und mit einem Gewinde versehen ist, und wobei die Schraube (20)
∘ ausgelegt ist, um gleitend in den Durchgang (13) der Muffe (10) eingepasst zu werden, und
- ein Regulierungsstück (30), das:
∘ ein Mittelloch (33) umfasst, das ausgelegt ist, um drehbar an dem Gewinde der Schraube (20) befestigt zu werden,
∘ eine drehbar nichtsymmetrische Gegenfläche (31) zum Drehen des Regulierungsstücks (30) mit einem Werkzeug (50, 70) umfasst, und wobei das Regulierungsstück (30)
∘ ausgelegt ist, um in seiner Gesamtheit gleitend in den Durchgang (13) der Muffe (10) eingepasst zu werden,
**dadurch gekennzeichnet, dass** das Regulierungsstück (30) ausgelegt ist, um drehbar in den Durchgang (13) der Muffe (10) eingepasst zu werden.

2. Befestigungselement (100) nach Anspruch 1, wobei:
- der Körper (11) der Muffe (10) eine Längsachse aufweist,
- sich der Durchgang (13) in die Richtung der Längsachse des Körpers (11) erstreckt, und wobei
- das Regulierungsstück (30), wenn es in dem Durchgang (13) installiert ist, ausgelegt ist, um um die Längsachse gedreht und in die Richtung der Längsachse geschoben zu werden.

3. Befestigungselement (100) nach Anspruch 1 oder 2, wobei das Einpassen zwischen dem Regulierungsstück (30) und dem Durchgang (13) eine Drehbewegung zwischen der Regulierungsmutter (30) und dem Durchgang (13) zulässt.

4. Befestigungselement (100) nach einem der vorstehenden Ansprüche, wobei der Durchgang (13) Folgendes umfasst:
- einen breiten Abschnitt (13a), der einen Durchmesser (d₁₃ₐ) aufweist, und
- einen schmalen Abschnitt (13b), der einen Durchmesser (d_{13b}) aufweist, der kleiner ist als der Durchmesser (d₁₃ₐ) des breiten Abschnitts (13a).

5. Befestigungselement (100) nach einem der vorstehenden Ansprüche, wobei:
- sich der Körper (11) der Muffe (10) zwischen dem Anfangsende (12) und dem Endflansch (14) erstreckt, und wobei
- der schmale Abschnitt (13b) des Durchgangs (13) im Bereich des Anfangsendes (12) liegt und der breite Abschnitt (13a) im Bereich des Endflanschs (14) liegt.

6. Befestigungselement (100) nach Anspruch 5, wobei der Endflansch (14) mindestens eine Haltekralle (15), insbesondere von zwei bis vier Haltekrallen (15) umfasst, die sich von dem Endflansch (14) in die Richtung des Körpers (11) erstreckt/erstrecken.

7. Befestigungselement (100) nach einem der vorstehenden Ansprüche, wobei das Mittelloch (33) des Regulierungsstücks (30) ein Innengewinde oder eine formbare Oberfläche umfasst, die in das Außengewinde der Schraube (20) eingepasst werden kann, um ein Schraubverbindung zu erstellen.

8. Befestigungselement (100) nach einem der vorstehenden Ansprüche, wobei:
- das Regulierungsstück (30) einen drehbar symmetrischen Körper (32) umfasst, aus dem ein drehbar nichtsymmetrischer Kopf (31) vorsteht, und wobei
- der Durchgang (13) eine Längsachse und eine kreisrunde Querschnittsform in Bezug auf die Längsachse aufweist, um die Drehbewegung des Regulierungsteils (30) zuzulassen.

9. Befestigungselement (100) nach einem der vorstehenden Ansprüche, wobei der größte Durchmesser (D₃₂) des Körpers (32) des Regulierungsstücks (30) größer ist als der kleinste (D₃₁) Durchmesser des Kopfs (31) des Regulierungsstücks (30).

10. Befestigungselement (100) nach einem der vorstehenden Ansprüche, wobei der Durchmesser (D₂₃) des Kopfs (23) der Schraube (20) gleich groß oder kleiner ist als der Durchmesser (D₃₁) des Kopfs (31) des Regulierungsstücks (30).

11. Befestigungselement (100) nach einem der vorstehenden Ansprüche, wobei der Außendurchmesser (D₃₂, D₃₁) des Regulierungsstücks (30) kleiner ist als der Innendurchmesser (d₁₃ₐ, d_{13b}) des Durchgangs (13), so dass, wenn das Regulierungsstück (30) in dem Durchgang (13) installiert ist, Freiraum zwischen dem Regulierungsstück (30) und dem Körper (11) der Muffe (10) zum Aufnehmen des mit dem Kopf (31) verbundenen Regulierungsschlüssels (70) des Regulierungsstücks (30) verbleibt.

12. Befestigungselement (100) nach einem der vorstehenden Ansprüche 4 bis 11, wobei:
- der Durchmesser (D₃₂) des Körpers (32) des Regulierungsstücks (30) größer ist als der Durchmesser (d_{13b}) des schmalen Abschnitts (13b) des Durchgangs (13), um die axiale Bewegung des Regulierungsstücks (30) zur Unterseite des Durchgangs (13) zu begrenzen, und wobei
- der größte Durchmesser (D₃₁) des Kopfs (31) des Regulierungsstücks (30) kleiner ist als der Durchmesser (d₁₃ₐ) des breiten Abschnitts (13a) des Durchgangs (13), um einen Freiraum zu bilden, der zwischen dem Regulierungsstück (30) und dem Körper (11) der Muffe (10) verbleibt, und um den mit dem Kopf (31) des Regulierungsstücks (30) verbindenden Regulierungsschlüssel (70) aufzunehmen.

13. Befestigungselement (100) nach einem der vorstehenden Ansprüche 1 bis 7, wobei der Hohlkörper (32) des Regulierungsstücks (30) Folgendes einschließt:
- einen ersten Abschnitt (32a), der angeordnet ist, um den Gewindeabschnitt (21) der Schraube (20) aufzunehmen, und
- einen zweiten Abschnitt (32b), der eine innere Gegenfläche (31) umfasst, die eine drehbar nichtsymmetrische Querschnittsform aufweist.

14. Befestigungselement (100) nach Anspruch 13, wobei die innere Gegenfläche (31) geformt ist, um eine Buchsenanschlussschnittstelle zum Verbinden einer Steckergegenfläche (51) zu bilden.

15. Befestigungselement (100) nach Anspruch 13 oder 14, wobei:
- der erste Abschnitt (32a) des Körpers (32) des Regulierungsstücks (30) einen Innendurchmesser (d₃₃) aufweist,
- der zweite Abschnitt (32b) des Körpers (32) des Regulierungsstücks (30) einen Innendurchmesser (d₃₁) aufweist, der größer ist als der Innendurchmesser (d₃₃) des ersten Abschnitts (32a), um eine untere Schulter für den Kopf (23) der Schraube (20) zu bilden.

16. Verfahren zum Installieren eines Befestigungselements (100) nach einem der vorstehenden Ansprüche 1-15, wobei das Verfahren **gekennzeichnet ist durch**:
(a2) Einpressen der Muffe (10) in den Isolierbelag (300) über der Aufnahmestruktur (200),
(b) Eindrehen der Schraube (20) in die Aufnahmestruktur (200),
(c) Drehen des Regulierungsstücks (30) in Bezug auf die Schraube (20) zum Festziehen der Muffe (10) am Isolierbelag (300).

17. The Verfahren nach Anspruch 16, wobei:
(a1) vor Schritt (a2), Bohren eines Vorbereitungslochs (201) in die Aufnahmestruktur (200) und den Isolierbelag (300) darauf, wodurch
in Stufe (b) die Schraube (20) in das Vorbereitungsloch (201) eingedreht wird.

## Revendications

1. Élément de fixation (100), qui comprend :
- un manchon (10), qui comprend un corps (11) équipé d'un passage (13),
- une vis (20), qui :
∘ comprend une pointe (22) et une tête (23),
∘ comprend une tige (21), s'étendant entre la pointe (22) et la tête (23), équipée d'un filet, et laquelle vis (20)
° est configurée pour être ajustée de façon coulissante dans le passage (13) du manchon (10), et
- une pièce d'ajustement (30), qui :
° comprend un trou central (33), qui est configuré pour être attaché de façon rotative au filet de la vis (20),
° comprend une contre-surface non symétrique en rotation (31) pour mettre en rotation la pièce d'ajustement (30) avec un outil (50, 70), et laquelle pièce d'ajustement (30)
° est configurée pour être ajustée de façon coulissante dans sa totalité dans le passage (13) du manchon (10),
**caractérisé en ce que** la pièce d'ajustement (30) est configurée pour être ajustée de façon rotative dans le passage (13) du manchon (10).

2. Élément de fixation (100) selon la revendication 1, dans lequel :
- le corps (11) du manchon (10) a un axe longitudinal,
- le passage (13) s'étend dans la direction de l'axe longitudinal du corps (11), et dans lequel
- la pièce d'ajustement (30) est, lorsqu'elle est installée dans le passage (13), configurée pour être mise en rotation autour dudit axe longitudinal et pour faire l'objet d'un coulissement dans la direction de l'axe longitudinal.

3. Élément de fixation (100) selon la revendication 1 ou 2, dans lequel l'ajustement entre la pièce d'ajustement (30) et le passage (13) permet un mouvement de rotation entre l'écrou d'ajustement (30) et le passage (13).

4. Élément de fixation (100) selon l'une quelconque des revendications précédentes, dans lequel le passage (13) comprend :
- une portion large (13a), qui a un diamètre (d₁₃ₐ), et
- une portion étroite (13b), qui a un diamètre (d_{13b}), qui est plus petit que le diamètre (d₁₃ₐ) de la portion large (13a).

5. Élément de fixation (100) selon l'une quelconque des revendications précédentes, dans lequel :
- le corps (11) du manchon (10) s'étend entre la pointe (12) et la bride d'extrémité (14) et dans lequel
- la portion étroite (13b) du passage (13) est dans la zone de l'embout (12) et la portion large (13a) est dans la zone de la bride d'extrémité (14).

6. Élément de fixation (100) selon la revendication 5, dans lequel la bride d'extrémité (14) comprend au moins une griffe de retenue (15), particulièrement de deux à quatre griffes de retenue (15), qui s'étend/s'étendent à partir de la bride d'extrémité (14) dans la direction du corps (11).

7. Élément de fixation (100) selon l'une quelconque des revendications précédentes, dans lequel le trou central (33) de la pièce d'ajustement (30) comprend un filet interne ou une surface formable, qui peut être ajustée sur le filet externe de la vis (20) pour créer un joint fileté.

8. Élément de fixation (100) selon l'une quelconque des revendications précédentes, dans lequel :
- la pièce d'ajustement (30) comprend un corps symétrique en rotation (32), à partir duquel une tête non symétrique en rotation (31) fait saillie et dans lequel
- le passage (13) a un axe longitudinal et un forme de section transversale circulaire par rapport à l'axe longitudinal pour permettre le mouvement de rotation de la pièce d'ajustement (30).

9. Élément de fixation (100) selon l'une quelconque des revendications précédentes, dans lequel le plus grand diamètre (D₃₂) du corps (32) de la pièce d'ajustement (30) est plus grand que le plus petit (D₃₁) diamètre de la tête (31) de la pièce d'ajustement (30).

10. Élément de fixation (100) selon l'une quelconque des revendications précédentes, dans lequel le diamètre (D₂₃) de la tête (23) de la vis (20) est aussi grand ou plus petit que le diamètre (D₃₁) de la tête (31) de la pièce d'ajustement (30).

11. Élément de fixation (100) selon l'une quelconque des revendications précédentes, dans lequel le diamètre extérieur (D₃₂, D₃₁) de la pièce d'ajustement (30) est plus petit que le diamètre interne (d₁₃ₐ, d_{13b}) du passage (13), de sorte que, lorsque la pièce d'ajustement (30) est installée dans le passage (13), un espace libre reste entre la pièce d'ajustement (30) et le corps (11) du manchon (10) pour recevoir la clef d'ajustement (70) se raccordant à la tête (31) de la pièce d'ajustement (30).

12. Élément de fixation (100) selon l'une quelconque des revendications précédentes 4 à 11, dans lequel :
- le diamètre (D₃₂) du corps (32) de la pièce d'ajustement (30) est plus grand que le diamètre (d_{13b}) de la portion étroite (13b) du passage (13) afin de limiter le mouvement axial de la pièce d'ajustement (30) au fond du passage (13) et dans lequel
- le diamètre le plus grand (D₃₁) de la tête (31) de la pièce d'ajustement (30) est plus petit que le diamètre (d₁₃ₐ) de la portion large (13a) du passage (13) afin de former un espace libre restant entre la pièce d'ajustement (30) et le corps (11) du manchon (10) et de recevoir la clef d'ajustement (70) se raccordant à la tête (31) de la pièce d'ajustement (30).

13. Élément de fixation (100) selon l'une quelconque des revendications précédentes 1 à 7, dans lequel le corps creux (32) de la pièce d'ajustement (30) entoure :
- une première portion (32a), qui est agencée pour recevoir la portion filetée (21) de la vis (20), et
- une seconde portion (32b), qui comprend une contre-surface interne (31), qui a une forme de section transversale non symétrique en rotation.

14. Élément de fixation (100) selon la revendication 13, dans lequel la contre-surface interne (31) est formée pour former une interface de raccordement femelle destinée à se raccorder à une contre-surface mâle (51).

15. Élément de fixation (100) selon la revendication 13 ou 14, dans lequel :
- une première portion (32a) du corps (32) de la pièce d'ajustement (30) a un diamètre interne (d₃₃),
- une seconde portion (32b) du corps (32) de la pièce d'ajustement (30) a un diamètre interne (d₃₁), qui est plus grand que le diamètre interne (d₃₃) de la première portion (32a) afin de former un épaulement inférieur pour la tête (23) de la vis (20).

16. Procédé pour installer un élément de fixation (100) selon l'une quelconque des revendications précédentes 1 à 15, lequel procédé est **caractérisé par** :
(a2) la pression du manchon (10) dans le platelage d'isolation (300) par-dessus la structure de réception (200),
(b) le vissage de la vis (20) dans la structure de réception (200),
(c) la rotation de la pièce d'ajustement (30) par rapport à la vis (20) pour serrer le manchon (10) sur le platelage d'isolation (300).

17. Procédé selon la revendication 16, dans lequel :
(a1) avant l'étape (a2), le forage d'un trou préparatoire (201) dans la structure de réception (200) et le platelage d'isolation (300) au-dessus de celle-ci, moyennant quoi
dans l'étape (b), la vis (20) est vissée dans le trou préparatoire (201).
